# EUROPEAN PATENT APPLICATION

(11) **EP 4 517 017 A1**
(43) Date of publication of application: **05.03.2025**
(21) Application number: 23193781.4
(22) Date of filing: 28.08.2023
(51) Int. Cl.: E04B 1/10, E04B 1/26, E04B 1/61, F16B 43/02

(54) **AN ASSEMBLY FOR CONNECTING CONSTRUCTION ELEMENTS, PARTICULARLY TIMBER CONSTRUCTION ELEMENTS**

(71) Applicant: Rotho Blaas S.r.l., 39040 Cortaccia (BZ) (IT)
(72) Inventor: BLAAS, Robert, 39040 Cortaccia (IT)
(74) Representative: Hafner & Kohl PartmbB

(57) **Abstract**

An assembly for connecting construction elements, particularly timber construction elements.

## Description

The invention relates to an assembly for connecting construction elements, particularly timber construction elements.

Respective assemblies for connecting construction elements, particularly timber construction elements, such as e.g. timber beams or timber trusses, are generally known from prior art. Respective assemblies typically comprise at least one washer member comprising a base body having a first wall comprising an opening and a second wall comprising an opening, wherein a receiving channel for receiving a fastening member, such as a screw, extends through the base body between the opening in the first wall and the opening in the second wall, wherein the base body comprises at least one mounting projection projecting off the second wall and configured to engage with a receiving portion of a plate member of the assembly. Hence, respective assemblies also comprise a respective plate member comprising at least one receiving portion for receiving the at least one mounting projection projecting off the second wall of the base body of the at least one washer member.

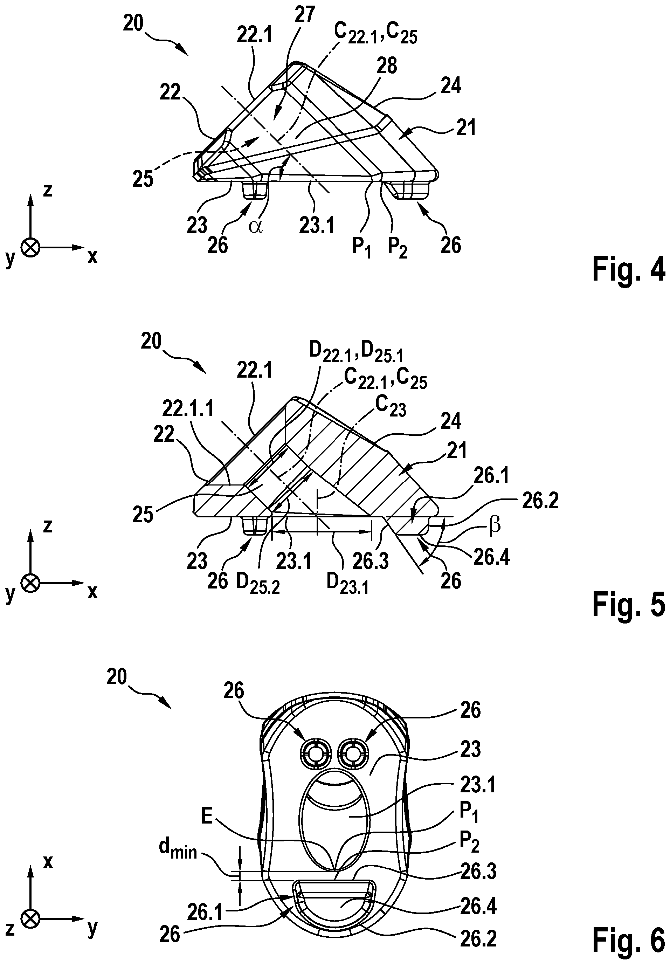

A concrete example of a respective assembly which is configured and restricted to connect timber construction elements is shown in document DE 10 2009 037 820 A1. This example of a respective assembly has several drawbacks e.g. with respect to its manufacturing process, weight and the introduction of forces into the washer member in the mounted state of the assembly. The drawbacks are based on the design of the washer member which comprises a respective mounting projection which is directly adjacent to the opening in the second wall such that the opening in the second wall is directly surrounded by the mounting projection. As a consequence, the receiving channel ends in the mounting projection and the mounting projection forms part of the receiving channel which means that, in the mounted state of the assembly, a respective fastening member necessarily penetrates through and typically contacts the mounting projection as is apparent from Figure 4 of the document, for instance.

It is therefore, the object of the invention to provide an improved assembly for connecting construction elements, particularly timber construction elements.

The object is achieved by the subject-matter of the independent claims. The claims depending therefrom relate to possible embodiments of the subject-matter of the independent claims.

A first aspect of the invention relates to an assembly for connecting construction elements, particularly timber construction elements. The assembly is thus, configured to connect two or more construction elements. Respective construction elements can be construction elements for constructing a building, for instance. Respective construction elements can comprise but are not limited to beams, trusses, panels, plates, sockets, etc. Particularly, the assembly is configured to connect two or more timber construction elements, such as but not limited to timber beams, timber trusses, timber panels, timber plates, timber sockets, etc. It is also possible that the assembly is configured to connect two or more construction elements made of different materials or different material structures, respectively. As an example, the assembly can be configured to connect a first construction element, such as but not limited to a beam, a truss, a panel, a plate, a socket, etc., made of a first material or a first material structure with at least one further construction element, such as but not limited to a beam, a truss, a panel, a plate, a socket, etc., made of a further material or a further material structure, respectively. The first material or the first material structure can be or comprise timber or can be made of timber or a timber structure, the further material or the further material structure can be or comprise a ceramic, a construction material, e.g. concrete, a composite material, a metal, etc. or can be made of a ceramic, a construction material, e.g. concrete, a composite material, a metal, etc. As such, the assembly generally has a high degree of flexibility with respect to the materials of the construction elements which can be connected.

Particularly, the assembly can be configured to connect respective construction elements in a series arrangement. As such, the assembly can define a connection axis along which the construction elements to be connected via the assembly and the construction elements which are connected via the assembly, respectively are arranged. The connection axis can be defined by the longitudinal axis of at least one plate member of the assembly, for instance. If respective construction elements to be connected via the assembly and construction elements which are connected via the assembly, respectively also comprise a longitudinal axis, a coaxial arrangement is possible in which the longitudinal axes of the respective construction elements are coinciding with or parallel to the connection axis. However, it is also conceivable that the assembly allows for connecting construction elements in an arrangement in which their respective longitudinal axes are arranged at an angle, particularly an angle of 90°.

The assembly comprises at least one washer member. The at least one washer member comprises a base body having at least a first wall and a second wall. The base body can have a longitudinal axis, a width axis transverse to the longitudinal axis, and a height axis transverse to both the longitudinal axis and the width axis.

The first wall can be or form a top wall of the base body which does not contact a plate member of the assembly in the mounted state of the assembly. The first wall can have a rectangular base shape. The first wall can be flat or plane, respectively. The first wall can have a main extension plane. The first wall can comprise an opening (first opening). The opening of the first wall is particularly sized and shaped to receive a fastening member, such as e.g. a screw or a threaded bolt. The opening of the first wall comprises a central axis which is inclined or transverse to the main extension plane of the first wall. The opening in the first wall or the base body, respectively can comprise one or more support surfaces, e.g. slanted surfaces, for supporting a head portion of a fastening member, such as e.g. a screw head, in the mounted state of the assembly.

The second wall can be or form a bottom wall of the base body which does contact a plate member of the assembly in the mounted state of the assembly. The second wall can have a rectangular base shape. The second wall can be flat or plane, respectively. The second wall can have a main extension plane different from the main extension plane of the first wall. The second wall can comprise an opening (second opening). The opening of the second wall is particularly sized and shaped to receive a fastening member, such as e.g. a screw or a threaded bolt. The opening of the second wall comprises a central axis which is inclined or transverse to the main extension plane of the second wall. The opening of the second wall of the base body can have an inner diameter which is bigger than the inner diameter of the opening in the first wall of the base body. This can be beneficial with respect to a weight optimization of the base body and also enables that a shaft portion of a fastening member passing through a respective receiving channel extending between the opening in the first wall and the opening in the second wall (see the following remarks) has no or only little contact with the walls of the base body which delimit the receiving channel.

As indicated above, a receiving channel for receiving a fastening member extends through the base body between the opening in the first wall and the opening in the second wall. As such, the opening in the first wall and the opening in the second wall communicate via the receiving channel. Particularly, respective ends of the receiving channel are defined by the opening in the first wall and the opening in the second wall, wherein, at least in the mounted state of the assembly, the opening in the first wall can define an upper end of the receiving channel and the opening in the second wall can define a lower end of the receiving channel. The receiving channel can comprise a central axis. The central axis of the receiving channel can be transverse to the main extension plane of the first wall. The central axis of the receiving channel can be inclined relative to the main extension plane of the second wall. The respective inclination angle can range between 1° and 75°, particularly between 3° and 65°, more particularly between 5° and 55°, for instance. According to a preferred embodiment, the inclination angle can be 45°.

When mounting the assembly, the opening in the first wall typically, serves as an insertion opening via which a respective fastening member can be inserted into the receiving channel. The fastening member typically completely penetrates through the receiving channel and exits the receiving channel via the opening in the second wall. The opening in the second wall typically, serves as an exit opening via which a respective fastening member exits the receiving channel to penetrate into a construction element.

The base body of the at least one washer member further comprises at least one mounting projection which projects off the second wall. The at least one mounting projection is configured to engage with a receiving portion of a plate member of the assembly in the mounted state of the assembly. When engaged with a respective receiving portion of a respective plate member, at least one wall of the at least one mounting projection directly abuts and contacts a wall of the plate member which delimits the receiving portion of the plate member. Hence, when engaged with a respective receiving portion of a respective plate member, the at least one mounting projection is configured to receive forces, particularly stress, during and after mounting of the assembly. As such, forces, particularly shear forces or tensile forces, can be transferred from the plate member to the at least one washer member during mounting of the assembly and in the mounted state of the assembly.

In addition to the at least one washer member, the assembly further comprises at least one plate member. The at least one plate member comprises at least one receiving portion, e.g. a cut-out, for engageably receiving the at least one mounting projection projecting off the second wall of the base body of the at least one washer member in the mounted state of the assembly. Typically, the at least one plate member comprises multiple receiving portions which can be arranged in pairs, for instance. Typically, one or more first receiving portions are configured for receiving the at least one mounting projection of one or more first washer members which are assigned to a first construction element and enable connecting the first construction element with the at least one plate member, and one or more second receiving portions are configured for receiving the at least one mounting projection of one or more second washer members which are assigned to a second construction element and enable connecting the second construction element with the at least one plate member.

Returning to the at least one washer member, the at least one mounting projection, which projects off the second wall of the base body, is disposed offset from an edge portion of the second wall which delimits the opening in the second wall of the base body. Offsetting the at least one mounting projection means that there is a minimum distance between the edge portion which delimits the opening in the second wall of the base body closest to the at least one mounting projection and the at least one mounting projection, particularly a wall of the at least one mounting projection closest to the respective edge portion which delimits the opening in the second wall of the base body. As such, the at least one mounting projection does not delimit the opening in the second wall of the base body since it is offset from the edge portion of the second wall of the base body which delimits the opening in the second wall of the base body. Hence, the opening in the second wall of the base body does not form part of the at least one mounting projection and vice versa. The receiving channel of the base body does therefore, not extend through the at least one mounting projection and the receiving channel does not end in the at least one mounting projection, respectively which also means that the at least one mounting projection does not form part of the receiving channel either. Hence, since the at least one mounting projection is offset from the edge portion of the second wall of the base body which delimits the opening in the second wall of the base body, a fastening member which penetrates through the receiving channel of the base body is typically, not contacting the at least one mounting projection.

Offsetting the at least one mounting projection from the edge portion of the second wall of the base body which delimits the opening in the second wall of the base body results in less constraints and thus, creates more freedom with respect to the concrete design of the at least one washer member. Further, offsetting the at least one mounting projection from the edge portion of the second wall of the base body which delimits the opening in the second wall of the base body can ease manufacturing the at least one washer member, e.g. because the receiving channel can be manufactured as a simple bore in the base body. Also, possibly undesired deformations of the opening in the second wall of the base body can be avoided or at least reduced since forces exerted on the at least one mounting projection cannot be directly transferred to the edge portion of the second wall of the base body which delimits the opening in the second wall of the base body.

As indicated above, offsetting the at least one mounting projection means that there is a minimum distance between the edge portion closest to the at least one mounting projection and the at least one mounting projection, particularly a wall of the at least one mounting projection closest to the respective edge portion which delimits the opening in the second wall of the base body. The minimum distance can be defined by a straight line extending between a point of the edge portion closest to the at least one mounting projection and the at least one mounting projection, particularly a point of a wall of the at least one mounting projection closest to the respective point of the edge portion which delimits the opening in the second wall of the base body.

The minimum distance is at least 0.5 mm, particularly at least 1.0 mm, more particularly at least 1.5 mm, more particularly at least 2.0 mm, more particularly at least 2.5 mm, more particularly at least 3.0 mm, more particularly at least 3.5 mm, more particularly at least 4.0 mm, more particularly at least 4.5 mm, more particularly at least 5.0 mm, more particularly at least 5.5 mm, more particularly at least 6.0 mm, more particularly at least 6.5 mm, more particularly at least 7.0 mm, more particularly at least 7.5 mm, more particularly at least 8.0 mm, more particularly at least 8.5 mm, more particularly at least 8.5 mm, more particularly at least 9.0 mm, more particularly at least 9.5 mm, more particularly at least 10.0 mm. The minimum distance is typically chosen under consideration of the overall geometric-constructive design, particularly the dimensions, of the at least one washer member.

Hence, offsetting the at least one mounting projection from an edge portion of the second wall which delimits the opening in the second wall overcomes the drawbacks of respective washer members of known assemblies, such as particularly the one specified in document DE 10 2009 037 820 A1.

In exemplary embodiments, the at least one mounting projection comprises a base portion defined by a first wall not facing the opening in the second wall of the base body. The first wall of the base portion is typically, the wall of the at least one mounting projection which contacts the plate member in the mounted state of the assembly. Particularly, the first wall of the base portion is typically, the wall via which forces can be transferred from the plate member to the at least one mounting projection in the mounted state of the assembly. As such, the first wall of the base portion is arranged and configured to contact a wall portion of the at least one plate member which delimits the at least one receiving portion of the at least one plate member.

The first wall of the base portion can have an arc-shape or a polygonal-shape, for instance. Respective arc- or polygonal-shapes can be beneficial with respect to the transfer of forces between the at least one mounting projection and the at least one plate member during mounting of the assembly and in the mounted state of the assembly, respectively. The at least one mounting projection can thus, have a semi-circular disk basic shape. Generally, the shape of the first wall of the base portion can be chosen such that a maximum contact surface between the at least one mounting projection and the wall portion of the plate member which delimit a respective receiving portion of the at least one plate member is given such that an optimized transfer of forces is possible during mounting of the assembly and in the mounted state of the assembly, respectively.

In further exemplary embodiments, the base portion of the at least one mounting projection comprises a second wall facing the opening in the second wall of the base body. The second wall of the base portion can thus, be opposite to the first wall of the base portion. The second wall of the base portion is thus, not arranged and configured to contact a wall portion of the at least one plate member which delimits the at least one receiving portion of the at least one plate member.

The second wall of the base portion can be inclined or have an inclined shape, particularly relative to the main extension plane of the second wall of the base body, or can be curved or have a curved shape, particularly a concave or convex curved shape. Respective inclined or curved shapes of the second wall of the base portion can be beneficial for the structural properties of the at least one mounting projection. Further, respective inclined or curved shapes of the second wall of the base portion can be beneficial for a weight-optimized design of the at least one washer member. Hence, both the structural properties of the at least one mounting projection and the weight of the at least one washer member can be concertedly influenced via constructive-geometric parameters of the second wall of the base portion. As an example, the structural properties of the at least one mounting projection and the weight of the at least one washer member can be concertedly influenced via the inclination angle of an inclined second wall of the base portion and the radius of the curvature of a curved second wall of the base portion, respectively.

In a concrete exemplary embodiment, the second wall of the base portion has an inclined shape relative to the main extension plane of the second wall of the base body, wherein the inclination angle of the second wall of the base portion relative to the main extension plane of the second wall of the base body is different from the angle between the central axis of the receiving channel relative to the main extension plane of the second wall of the base body. Particularly, the inclination angle of the second wall of the base portion relative to the main extension plane of the second wall of the base body can be higher than the angle between the central axis of the receiving channel relative to the main extension plane of the second wall of the base body. As an example, the inclination angle of the second wall of the base portion relative to the main extension plane of the second wall of the base body can range between 50° and 60° and the angle between the central axis of the receiving channel and the main extension plane of the second wall of the base body can range between 42.5° and 47.5°.

In further exemplary embodiments, the base portion of the at least one mounting projection comprises a third wall extending parallel to a main extension plane of the second wall of the base body. The distance between the second wall of the base body and the third wall of the base portion typically, defines the height of the at least one mounting projection. The height of the at least one mounting projection can range between 1 mm and 10 mm, particularly between 1 mm and 7.5 mm, more particularly between 1 mm and 5 mm, more particularly between 1 mm and 3 mm. The height of the at least one mounting projection is also a geometric-constructive parameter of the at least one washer member via which the structural properties of the at least one mounting projection and the weight of the at least one washer member can be concertedly influenced.

In exemplary embodiments, the at least one washer member comprises a single mounting projection. Hence, the at least one washer member can comprise only one distinct mounting projection. Providing the at least one washer member with only a single mounting projection results not only in a simplified and weight-optimized design but also in more flexibility with respect to the spatial arrangement of the at least one washer member relative to a plate member, e.g. since the at least one washer member can be rotated relative to the plate member. Notably, the at least one single mounting projection can have a respective semi-circular disk basic shape as specified above. As such, all respective annotations in context with a semi-circular disk basic shape of the at least one mounting projection as specified above particularly, apply to embodiments of the at least one washer member with only one mounting projection.

In further exemplary embodiments, the at least one washer member comprises a plurality of mounting projections. Hence, the at least one washer member can comprise a plurality of distinct mounting projections. As will be apparent from further below, at least two mounting projections of the plurality of mounting projections can have different dimensions and/or different base shapes. Hence, at least one wall of a respective base portion of a first mounting projection can differ from at least one wall of a respective base portion of a second mounting projection in at least one geometric-constructive parameter, for instance. As an example, at least one mounting projection can have a semi-circular disk basic shape of first dimensions and at least one other mounting projection can have a semi-circular disk basic shape of second dimensions different from the first dimensions. As another example, at least one mounting projection can have a cubic base shape or a cuboid base shape or cylindrical base shape and at least one other mounting projection can have a base shape which is different from a cuboid base shape or cylindrical base shape, e.g. since it has a semi-circular disk basic shape as specified above.

Particularly, at least two mounting projections of the plurality of mounting projections can be arranged at opposite sides of the opening in the second wall of the base body. Hence, at least one first mounting projection can be arranged at a first side of the opening in the second wall of the base body and at least one second mounting projection can be arranged at a second side of the opening in the second wall of the base body which second side is opposite to the first side. A respective second wall of the base portion of a first mounting projection provided at a first side of the opening in the second wall of the base body can thus, also face a respective second wall of the base portion of a second mounting projection provided at a second side of the opening in the second wall of the base body. Such an arrangement cannot only result in an improved weight balance of the at least one washer member but the provision of two or more mounting projections can also enable that at least one mounting projection can serve for constraining motions of the at least one washer member in a respective receiving portion of a respective plate member. In other words, at least one mounting projection of the plurality of mounting projections can be arranged and configured such that, in the mounted state of the assembly, forces can be transferred onto the at least one washer member, and at least one other mounting projection of the plurality of mounting projections can be arranged and configured such that it constrains motions of the at least one washer member in a respective receiving portion of a respective plate member during mounting of the assembly.

In further exemplary embodiments, at least one first mounting projection is arranged at a first side of the opening in the second wall of the base body and at least two mounting projections are arranged at a second side of the opening in the second wall of the base body. The second side of the opening in the second wall of the base body can be opposite the first side of the opening in the second wall of the base body. Hence, the at least one washer member can comprise three distinct mounting projections. The first mounting projection arranged at the first side of the opening in the second wall of the base body can have a have a respective a semi-circular disk basic shape as specified above. As such, all respective annotations in context with a semi-circular disk basic shape as specified above particularly, apply to the first mounting projection. The first mounting projection arranged at the first side of the opening in the second wall of the base body can be arranged and configured such that, in the mounted state of the assembly, forces can be transferred onto the at least one washer member. The two or more mounting projections arranged at the second side of the opening in the second wall of the base body can be arranged and configured such that they constrain motions of the at least one washer member in a respective receiving portion of a respective plate member during mounting of the assembly.

The at least two mounting projections arranged at the second side of the opening in the second wall of the base body can have a different shape, particularly a smaller shape, relative to the first mounting projection arranged at the first side of the opening in the second wall of the base body. Particularly, the at least two mounting projections arranged at the second side of the opening in the second wall of the base body can have different dimensions and/or different base shapes relative to the first mounting projection arranged at the first side of the opening in the second wall of the base body. More particularly, the at least two mounting projections arranged at the second side of the opening in the second wall of the base body can have a cubic base shape or a cuboid base shape or a cylindrical base shape. Respective cubic base shapes, cuboid base shapes, or cylindrical base shapes are relatively simple shapes and thus, easy to implement when designing and manufacturing the at least one washer member.

Returning to embodiments of the at least one washer member, wherein at least two mounting projections of the plurality of mounting projections are arranged at opposite sides of the opening in the second wall of the base body, at least one mounting projection can have a bar-like base shape. The bar-like base shape particularly defines a longitudinal axis, wherein the longitudinal axis is arranged at an angle, particularly at an angle of 90°, relative to the longitudinal axis of the base body. The bar-like base shape can comprise a first wall facing the opening in the second wall of the base body and a second wall not facing the opening in the second wall of the base body. The second wall of the bar-like base shape can have an inclined shape, particularly relative to the main extension plane of the second wall of the base body, or a curved shape. The at least one mounting projection having the bar-like base shape can therefore, have a triangular cross-section at least when its second wall has an inclined shape.

According to an exemplary embodiment, the at least one washer member can comprise a first mounting projection arranged at a first side of the opening in the second wall of the base body, wherein the first mounting projection comprises a base portion defined by a first wall which faces away from the opening in the second wall of the base body, wherein the first wall of the base portion comprises an arc shape or a polygonal shape, and wherein the base portion comprises a second wall facing the opening in the second wall of the base body, wherein the second wall of the base portion has an inclined shape, particularly relative to the main extension plane of the second wall of the base body, or a curved shape. In this exemplary embodiment, the at least one washer member further comprises a second mounting projection arranged at a second side of the opening in the second wall of the base body, wherein the second mounting projection has a cubic base shape or a cuboid base shape or a cylindrical base shape. Tests have indicated that this configuration of the at least one washer member has benefits with respect to handling and manufacture.

Preferably, the at least one washer member of the aforementioned exemplary configuration can further comprise a third mounting projection arranged at the second side of the opening in the second wall of the base body, wherein the third mounting projection also has a cubic base shape or a cuboid base shape or a cylindrical base shape. Particularly, the second mounting projection and the third mounting projection can be identical in dimensions and/or shape. Also, the second mounting projection and the third mounting projection can be arranged symmetrically with respect to the center of the opening in the second wall of the base body.

According to another exemplary embodiment, the at least one washer member can comprise a first mounting projection arranged at a first side of the opening in the second wall of the base body, wherein the first mounting projection comprises a base portion defined by a first wall which faces away from the opening in the second wall of the base body, wherein the first wall of the base portion comprises an arc shape or a polygonal shape, and wherein the base portion comprises a second wall facing the opening in the second wall of the base body, wherein the second wall of the base portion has an inclined shape, particularly relative to the main extension plane of the second wall of the base body, or a curved shape. In this exemplary embodiment, the at least one washer member further comprises a second mounting projection arranged at a second side of the opening in the second wall of the base body, wherein the second mounting projection also comprises a base portion defined by a first wall which faces away from the opening in the second wall of the base body, wherein the first wall of the base portion comprises an arc shape or a polygonal shape, and wherein the base portion comprises a second wall facing the opening in the second wall of the base body, wherein the second wall of the base portion has an inclined shape, particularly relative to the main extension plane of the second wall of the base body, or a curved shape. Notably, the two mounting projections can be different in dimensions, wherein the first mounting projection can have bigger dimensions than the second mounting projection. Tests have indicated that also this configuration of the at least one washer member has benefits with respect to handling and manufacture.

According to another exemplary embodiment, the at least one washer member can comprise a first mounting projection arranged at a first side of the opening in the second wall of the base body, wherein the first mounting projection comprises a base portion defined by a first wall which faces away from the opening in the second wall of the base body, wherein the first wall of the base portion comprises an arc shape or a polygonal shape, and wherein the base portion comprises a second wall facing the opening in the second wall of the base body, wherein the second wall of the base portion has an inclined shape, particularly relative to the main extension plane of the second wall of the base body, or a curved shape. In this exemplary embodiment, the at least one washer member further comprises a second mounting projection arranged at a second side of the opening in the second wall of the base body, wherein the second mounting projection has a bar-like base shape, wherein the bar-like base shape comprises a first wall facing the opening in the second wall of the base body and a second wall not facing the opening in the second wall of the base body, wherein the second wall of the base portion has an inclined shape, particularly relative to the main extension plane of the second wall of the base body, or a curved shape. Tests have indicated that also this configuration of the at least one washer member has benefits with respect to handling and manufacture. When the second wall of the first mounting projection and the second wall of the bar-like base body of the second mounting projection each have an inclined shape, their respective inclination angles relative to the main extension plane of the second wall of the base body can be the same.

Returning to the base configuration of the base body of the at least one washer member, the first wall of the base body is typically, an inclined wall and the first wall of the base body is therefore, inclined relative to the second wall of the base body. Particularly, the main extension plane of the first wall of the base body can be inclined relative to the main extension plane of the second wall of the base body at angle between 5° and 85°, particularly between 15° and 75°, more particularly between 25° and 65°, more particularly between 35° and 55°.

Typically, the at least one washer member further comprises a third wall which does not contact the plate member of the assembly in the mounted state of the assembly. The third wall of the base body can also be or form a top wall of the at least one washer member. The third wall of the base body can have a rectangular base shape. The third wall of the base body has a main extension plane. Also the third wall of the base body is typically, an inclined wall and the third wall of the base body is therefore, inclined relative to the first wall of the base body and the second wall of the base body. Particularly, the main extension plane of the third wall of the base body can be inclined relative to the main extension plane of the second wall of the base body at angle between 5° and 85°, particularly between 15° and 75°, more particularly between 25° and 65°. The inclination angle between the first wall of the base body and the third wall of the base body can range between 25° and 75°, particularly between 35° and 65°, for instance.

Given that the base body comprises respective inclined walls, the at least one washer member can have a triangular base configuration. The triangular base configuration of the at least one washer member can be defined by the main extension planes of the three walls of the base body. Particularly, the triangular base configuration can be defined by the main extension planes of the three walls of the base body each having a rectangular base configuration.

The receiving channel of the base body can have at least two sections having different inner diameters. As such, the receiving channel of the base body can have a first section which has a first inner diameter and at least one further section having a further inner diameter different from the first inner diameter. Particularly, the receiving channel of the base body can have a first section which has a smaller inner diameter than at least one further section. The first section can be an upper section, particularly with respect to the opening in the first wall of the base body. The first section can thus, be assigned to or comprise the opening in the first wall of the base body. As such, the inner diameter of the opening in the first wall of the base body can correspond to the inner diameter of the first section. The first section can be a cylindrical section or a section comprising a cylindrical base shape, respectively. The at least one further section can be a lower section, particularly with respect to the opening in the second wall of the base body. The at least one further section can thus, be assigned to or comprise the opening in the second wall of the base body. As such, at least one the inner diameter of the opening in the second wall of the base body can correspond to the inner diameter of the at least one further section. When the inner diameter of the opening in the second wall of the base body is bigger than the inner diameter of the opening in the first wall of the base body, the inner diameter of the at least one further section can axially widen up towards the opening in the second wall of the base body. The at least one further section can be a conical section or comprise a conical base shape, respectively.

In exemplary embodiments, the first wall of the base body of the at least one washer member can have a conical base shape, particularly a frusto-conical base shape (frustum base shape). The base body of the at least one washer member can have a top portion which comprises the opening. The top portion can be inclined relative to the second wall of the base body and its main extension plane, respectively such that also the receiving channel and its central axis, respectively is inclined relative to the second wall of the base body and its main extension plane, respectively.

In such embodiments, the at least one mounting projection can have a ring- or ring-segment shaped configuration which surrounds the at least one opening in the second wall of the base body. The base portion of the at least one mounting projection can thus, have a wall having a ring-shape or a ring-segment shape. Also in this embodiment, the at least one mounting projection is disposed offset from an edge portion of the second wall of the base body delimiting the opening in the second wall of the base body, wherein the minimum distance between the edge portion closest to the at least one mounting projection and the mounting projection is at least 0.5 mm, particularly at least 1.0 mm, more particularly at least 1.5 mm, more particularly at least 2.0 mm, more particularly at least 2.5 mm, more particularly at least 3.0 mm, more particularly at least 3.5 mm, more particularly at least 4.0 mm, more particularly at least 4.5 mm, more particularly at least 5.0 mm, more particularly at least 5.5 mm, more particularly at least 6.0 mm, more particularly at least 6.5 mm, more particularly at least 7.0 mm, more particularly at least 7.5 mm, more particularly at least 8.0 mm, more particularly at least 8.5 mm, more particularly at least 8.5 mm, more particularly at least 9.0 mm, more particularly at least 9.5 mm, more particularly at least 10.0 mm. As such, the minimum distance between the edge portion closest to the at least one mounting projection and wall is at least 0.5 mm, particularly at least 1.0 mm, more particularly at least 1.5 mm, more particularly at least 2.0 mm, more particularly at least 2.5 mm, more particularly at least 3.0 mm, more particularly at least 3.5 mm, more particularly at least 4.0 mm, more particularly at least 4.5 mm, more particularly at least 5.0 mm, more particularly at least 5.5 mm, more particularly at least 6.0 mm, more particularly at least 6.5 mm, more particularly at least 7.0 mm, more particularly at least 7.5 mm, more particularly at least 8.0 mm, more particularly at least 8.5 mm, more particularly at least 8.5 mm, more particularly at least 9.0 mm, more particularly at least 9.5 mm, more particularly at least 10.0 mm.

The base body of the at least one washer member can be provided with at least one gripping section, particularly built through a depression, recess, or the like, more particularly a depression, recess, or the like with an ergonomic shape, which enables that a user can safely grip the base body e.g. when mounting the at least one washer member. Preferably, at least one respective gripping portion can be provided with the first wall of the base body and/or at least one respective gripping portion can be provided with at least one side wall of the base body which laterally connects the first wall of the base body and/or the third wall of the base body with the second wall of the base body.

In addition to the at least one washer member and the at least one plate member, the assembly can further comprise at least one fastening member configured to be inserted in and penetrate through the receiving channel of the base body. The at least one fastening member can have a longitudinal base shape and can thus, be built as or comprise a screw, particularly a wood screw, or a threaded bolt, for instance.

The at least one washer member can be a metal component, particularly a cast metal component. Particularly, the at least one washer member can be made of an iron-based metal, such as steel, or of a lightweight metal, such as aluminum or an aluminum alloy, respectively. The at least one washer member can be provided with an anti-corrosive surface which can be created via a chemically and/or physically applied coating, such as e.g. a plating.

Likewise, the at least one plate member can be a metal component. Particularly, the at least one plate member can be made of an iron-based metal, such as steel, or of a lightweight metal, such as aluminum or an aluminum alloy, respectively. However, a respective plate member could also be a fiber board or made from a fiber board, for instance The at least one plate member can be provided with an anti-corrosive surface which can be created via a chemically and/or physically applied coating, such as e.g. a plating.

Likewise, the at least one fastening member can be a metal component. Particularly, the at least one fastening member can be made of an iron-based metal, such as steel. The at least one fastening member can be provided with an anti-corrosive surface which can be created via a chemically and/or physically applied coating, such as e.g. a plating.

A second aspect of the invention relates to a washer member for an assembly according to the first aspect of the invention. The washer member comprises a base body having a first wall comprising an opening and a second wall comprising an opening, wherein a receiving channel for receiving a fastening member extends through the base body between the opening in the first wall and the opening in the second wall. The base body of the washer member comprises at least one mounting projection projecting off the second wall and configured to engage with a receiving portion of a plate member of a respective assembly. The at least one mounting projection is disposed offset from an edge portion of the second wall of the base body which delimits the opening in the second wall of the base body, wherein the minimum distance between the edge portion closest to the at least one mounting projection and the mounting projection is 0.5 mm, particularly 1.0 mm, more particularly 1.5 mm, more particularly at least 2.0 mm, more particularly at least 2.5 mm, more particularly at least 3.0 mm, more particularly at least 3.5 mm, more particularly at least 4.0 mm, more particularly at least 4.5 mm, more particularly at least 5.0 mm, more particularly at least 5.5 mm, more particularly at least 6.0 mm, more particularly at least 6.5 mm, more particularly at least 7.0 mm, more particularly at least 7.5 mm, more particularly at least 8.0 mm, more particularly at least 8.5 mm, more particularly at least 8.5 mm, more particularly at least 9.0 mm, more particularly at least 9.5 mm, more particularly at least 10.0 mm.

All annotations regarding the assembly of the first aspect of the invention apply in analogous manner to the washer member of the second aspect of the invention.

A third aspect of the invention relates to the use of an assembly according to the first aspect of the invention and/or the use of a washer member according to the second aspect of the invention for connecting at least two construction elements, particularly timber construction elements.

All annotations regarding the assembly of the first aspect of the invention apply in analogous manner to the use of the third aspect of the invention.

With these and other advantages and features that will become hereinafter apparent, a more complete understanding of the invention can be obtained by referring to the following description of the appended drawings in which:
Figures 1 - 3 are principle drawings of a washer member of an assembly according to a first exemplary embodiment;
Figures 4-6 are principle drawings of a washer member of an assembly according to another exemplary embodiment;
Figures 7-9 are principle drawings of a washer member of an assembly according to another exemplary embodiment;
Figures 10 is a principle drawing of an assembly according to an exemplary embodiment in the mounted state; and
Figures 11 - 13 are principle drawings of a washer member of an assembly according to another exemplary embodiment.

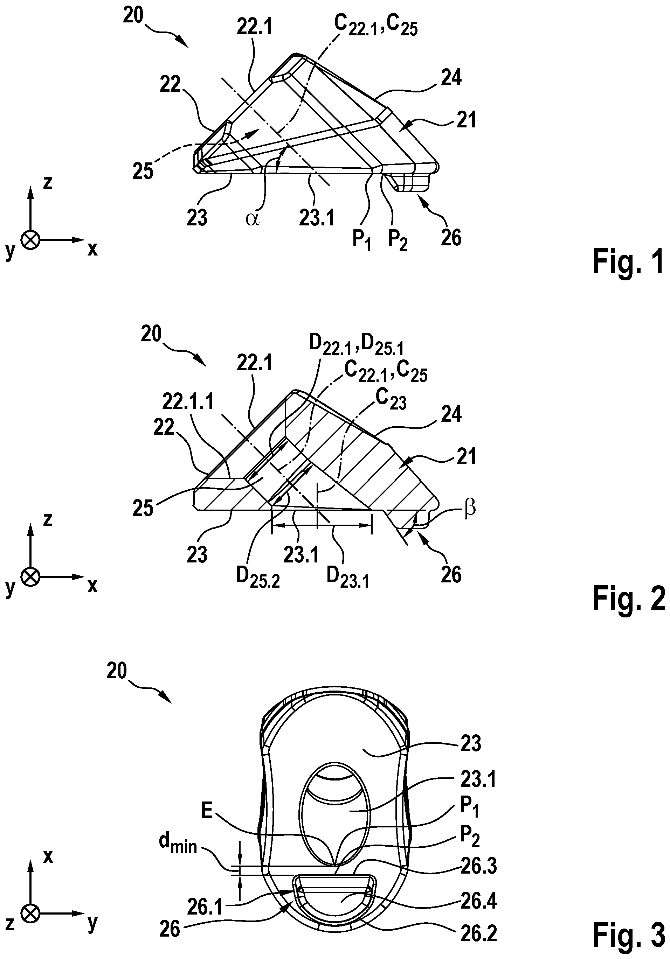

Figures. 1-3 are principle drawings of a washer member 20 of an assembly 10 according to a first exemplary embodiment. Figure 1 shows the washer member 20 in a side-view, Figure 2 in a longitudinally cut-view, and Figure 3 in a bottom view (similar views are provided in Figures 4 - 6, Figures. 7 - 9 and Figures 11 - 13 for the other embodiments of the washer member 20).

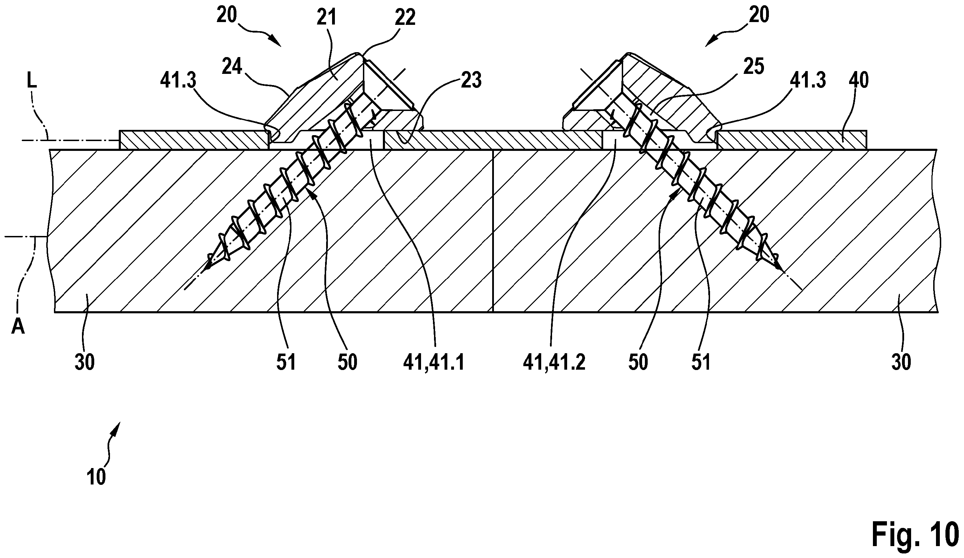

The assembly 10 is configured to connect two or more construction elements 30 (see Figure 10). Respective construction elements 30 can be construction elements 30 for constructing a building, for instance. Respective construction elements 30 can comprise but are not limited to beams, trusses, panels, plates, sockets, etc. Particularly, the assembly 10 is configured to connect two or more timber construction elements, such as but not limited to timber beams, timber trusses, timber panels, timber plates, timber sockets, etc. It is also possible that the assembly 30 is configured to connect two or more construction elements 30 made of different materials or different material structures, respectively. As an example, the assembly 10 can be configured to connect a first construction element 30, such as but not limited to a beam, a truss, a panel, a plate, a socket, etc., made of a first material or a first material structure with at least one further construction element 30, such as but not limited to a beam, a truss, a panel, a plate, a socket, etc., made of a further material or a further material structure, respectively. The first material or the first material structure can be or comprise timber or can be made of timber or a timber structure, the further material or the further material structure can be or comprise a ceramic, a construction material, e.g. concrete, a composite material, a metal, etc. or can be made of a ceramic, a construction material, e.g. concrete, a composite material, a metal, etc.

As is apparent from the exemplary embodiment of Figures 10, the assembly 10 can be configured to connect respective construction elements 30 in a series arrangement. As such, the assembly 10 can define a connection axis A along which the construction elements 30 to be connected or which are connected via the assembly 10 are arranged. The connection axis A can be defined by the longitudinal axis L of at least one plate member 40 of the assembly 10, for instance. If respective construction elements 30 to be connected or which are connected via the assembly 10 also comprise a longitudinal axis L, a coaxial arrangement is possible in which the longitudinal axes L of the respective construction elements 30 are coinciding with or parallel to the connection axis A. However, it is also conceivable that the assembly 10 allows for connecting construction elements 30 in an arrangement in which their respective longitudinal axes are arranged at an angle, particularly an angle of 90°.

The assembly 10 comprises at least one washer member 20 (see Figures 1 - 9 showing different views of washer members 20 according to different exemplary embodiments). The washer member 20 comprises a base body 21 having a first wall 22, a second wall 23, and a third wall 24. Each of the first wall 22, the second wall 23, and the third wall 24 can have a rectangular base shape.

The base body 21 can have a longitudinal axis (x-axis), a width axis (y-axis) transverse to the longitudinal axis L, and a height axis (z-axis) transverse to both the longitudinal axis and the width axis.

As is apparent from the Figures, each of the first wall 22 and the third wall 24 is an inclined wall and each of the first wall 22 and the third wall 24 is therefore, inclined relative to the second wall 22. Particularly, the main extension plane of the first wall 22 and the third wall 24 can be inclined relative to the main extension plane of the second wall of the base body at angle between 5° and 85°, particularly between 15° and 75°, more particularly between 25° and 65°, more particularly between 35° and 55°.

Given that the base body 21 comprises respective inclined walls, the washer member 20 can have a triangular base configuration. The triangular base configuration of the washer member 20 can be defined by the main extension planes of the three walls 22 - 24 of the base body 21. Particularly, the triangular base configuration can be defined by the main extension planes of the three walls 22 - 24 of the base body 21 each having a rectangular base configuration.

As is particularly apparent from Figure 1, the first wall 22 (and the third wall 24) can be or form a top wall of the base body 21 which does not contact the plate member 40 of the assembly 10 in the mounted state of the assembly 10 (see Figure 10). The first wall 22 can be flat or plane, respectively. The first wall 22 has a main extension plane. The first wall 22 comprises an opening 22.1 (first opening). The opening 22.1 of the first wall 22 can be circular and is sized and shaped to receive a fastening member 50, such as e.g. a screw or a threaded bolt (see Figure 10). The opening 22.1 of the first wall 22 comprises a central axis C_{22.1} which is inclined or transverse to the main extension plane of the first wall 22. As is shown in the Figures, the opening 22.1 in the first wall 22 or the base body 21, respectively can comprise one or more support surfaces 22.1.1, e.g. slanted surfaces, for supporting a head portion of a fastening member 50, such as e.g. a screw head, in the mounted state of the assembly 10.

As is particularly apparent from Figures 1 and 3, the second wall 23 can be or form a bottom wall of the base body 21 which does (directly) contact the plate member 40 of the assembly 10 in the mounted state of the assembly 10 (see Figure 10). The second wall 23 can be flat or plane, respectively. The second wall 23 has a main extension plane different from the main extension plane of the first wall 22. The second wall 23 comprises an opening 23.1 (second opening). The opening 23.1 of the second wall 23 can be oval and is sized and shaped to receive the fastening member 50, such as e.g. a screw or a threaded bolt (see Figure 10). The opening 23.1 of the second wall 23 comprises a central axis C_{23.1} which is inclined or transverse to the main extension plane of the second wall 23.

As is shown in Figure 2, the opening 23.1 of the second wall 23 can have an inner diameter D_{23.2} which is bigger than the inner diameter D_{22.1} of the opening 22.1 in the first wall 22. This can be beneficial with respect to a weight optimization of the base body 21 and also enables that a shaft portion 51 of a fastening member 50 passing through a respective receiving channel 25 extending between the opening 22.1 in the first wall 22 and the opening 23.1 in the second wall 23 (see the following remarks) has no or only little contact with the walls of the base body 21 which delimit the receiving channel 25 (see Figure 10).

As indicated above, a receiving channel 25 for receiving a fastening member 50 extends through the base body 21 between the opening 22.1 in the first wall 22 and the opening 23.1 in the second wall 23. As such, the opening 22.1 in the first wall 22 and the opening 23.1 in the second wall 23 communicate via the receiving channel 25. Particularly, respective ends of the receiving channel 25 are defined by the opening 22.1 in the first wall 22 and the opening 23.1 in the second wall 23, wherein, at least in the mounted state of the assembly 10, the opening 22.1 in the first wall 22 can define an upper end of the receiving channel 25 and the opening 23.1 in the second wall 23 can define a lower end of the receiving channel 25. The receiving channel 25 can comprise a central axis C₂₅ which can be transverse to the main extension plane of the first wall 22 and which can be inclined relative to the main extension plane of the second wall 23, wherein the respective inclination angle α can range between 1° and 75°, particularly between 3° and 65°, more particularly between 5° and 55°, for instance. According to a preferred embodiment, the inclination angle can be 45°.

When mounting the assembly 10, the opening 22.1 in the first wall 22 serves as an insertion opening via which a respective fastening member 50 can be inserted into the receiving channel 25. The fastening member 50 typically completely penetrates through the receiving channel 25 and exits the receiving channel 25 via the opening 23.1 in the second wall 23. The opening 23.1 in the second wall 23 thus, serves as an exit opening via which a respective fastening member 50 exits the receiving channel 25 to penetrate into a construction element 30 (see Figure 10).

The base body 21 of the washer member 20 further comprises at least one mounting projection 26 which projects off the second wall 23. The at least one mounting projection 26 is configured to engage with a receiving portion 41 of a plate member 40 of the assembly 10 in the mounted state of the assembly 10 (see Figure 10). When engaged with a respective receiving portion 41 of a respective plate member 40, at least one wall 26.1 of the at least one mounting projection 26 directly abuts and contacts a wall 41.3 of the plate member 40 which delimits the receiving portion 41 of the plate member 40. Hence, when engaged with a respective receiving portion 41 of a respective plate member 40, the at least one mounting projection 26 is configured to receive forces, particularly stress, during and after mounting of the assembly 10. As such, forces, particularly shear forces or tensile forces, can be transferred from the plate member 40 to the at least one washer member 26 during mounting of the assembly 10 and in the mounted state of the assembly 10 (as is apparent from Figure 10).

As is apparent from the above, the assembly 10 further comprises at least one plate member 40. The plate member 40 comprises at least one receiving portion 41, e.g. a cut-out, for engageably receiving the at least one mounting projection 26 projecting off the second wall 22 of the base body 21 of a respective washer member 20 in the mounted state of the assembly 10. Typically, the plate member 40 comprises multiple receiving portions 41 which can be arranged in pairs, for instance. Typically, one or more first receiving portions 41.1 are configured for receiving the at least one mounting projection 26 of one or more first washer members 40 which are assigned to a first construction element 30 and enable connecting the first construction element 30 with the plate member 40, and one or more second receiving portions 41.2 are configured for receiving the at least one mounting projection 26 of one or more second washer members 20 which are assigned to a second construction element 30 and enable connecting the second construction element 30 with the plate member 40.

Returning to the washer member 20, the at least one mounting projection 26, which projects off the second wall 23 of the base body 21, is disposed offset from an edge portion E of the second wall 23 which delimits the opening 23.1 in the second wall 23 (see particularly the bottom-views of Figure 3, Figure 6, and Figure 9). Offsetting the at least one mounting projection 26 means that there is a minimum distance dₘᵢₙ between the edge portion E of the second wall 23 which delimits the opening 23.1 in the second wall 23 closest to the at least one mounting projection 26 and the at least one mounting projection 26, particularly a wall of the at least one mounting projection 26 closest to the respective edge portion E which delimits the opening 23.1 in the second wall 23. As such, the at least one mounting projection 26 does not delimit the opening 23.1 in the second wall 23 since it is offset from the edge portion E of the second wall 23 which delimits the opening 23.1 in the second wall 23. Hence, the opening 23.1 in the second wall 23 does not form part of the at least one mounting projection 26 and vice versa. The receiving channel 25 of the base body 21 does therefore, not extend through the at least one mounting projection 26 and the receiving channel 25 does not end in the at least one mounting projection 26, respectively which also means that the at least one mounting projection 26 does not form part of the receiving channel 25 either. Hence, since the at least one mounting projection 26 is offset from the edge portion E of the second wall 23 which delimits the opening 23.1 in the second wall, a fastening member 50 which penetrates through the receiving channel 25 of the base body is not contacting the at least one mounting projection (see Figure 10). It is apparent from the Figures that the term "offset" can be understood as a lateral offset, particularly in the direction of the longitudinal axis of the base body 21 of the washer member 20.

Offsetting the at least one mounting projection 26 from the edge portion E of the second wall 23 which edge portion E delimits the opening 23.1 in the second wall 23 results in less constraints and thus, creates more freedom with respect to the concrete design of the washer member 20. Further, offsetting the at least one mounting projection 26 from the edge portion E of the second wall 23 which delimits the opening 23.1 in the second wall 23 can ease manufacturing the washer member 20, e.g. because the receiving channel 25 can be manufactured as a simple bore in the base body 21. Also, possibly undesired deformations of the opening 23.1 in the second wall 23 can be avoided or at least reduced since forces exerted on the at least one mounting projection 26 cannot be directly transferred to the edge portion E of the second wall 23 which delimits the opening 23.1 in the second wall 23.

As indicated above, offsetting the at least one mounting projection 26 means that there is a minimum distance dₘᵢₙ between the edge portion E of the second wall 23 closest to the at least one mounting projection 26 and the at least one mounting projection 26, particularly a wall of the at least one mounting projection 26 closest to the respective edge portion E which delimits the opening 23.1 in the second wall 23. The minimum distance dₘᵢₙ can be defined by a straight line extending between a point P₁ of the edge portion E closest to the at least one mounting projection 26 and the at least one mounting projection 26, particularly a point P₂ of a wall of the at least one mounting projection 26 closest to the respective point P₁ of the edge portion E.

The minimum distance dₘᵢₙ is at least 0.5 mm, particularly at least 1.0 mm, more particularly at least 1.5 mm, more particularly at least 2.0 mm, more particularly at least 2.5 mm, more particularly at least 3.0 mm, more particularly at least 3.5 mm, more particularly at least 4.0 mm, more particularly at least 4.5 mm, more particularly at least 5.0 mm, more particularly at least 5.5 mm, more particularly at least 6.0 mm, more particularly at least 6.5 mm, more particularly at least 7.0 mm, more particularly at least 7.5 mm. The minimum distance dₘᵢₙ is typically chosen under consideration of the overall geometric-constructive design, particularly the dimensions, of the washer member 20.

In the exemplary embodiments of at least Figures 1-3, the at least one mounting projection 26 comprises a base portion 26.1 defined by a first wall 26.2 not facing the opening 23.1 in the second wall 23 of the base body 21. The first wall 26.2 of the base portion 26.1 is typically, the wall of the mounting projection 26 which contacts the plate member 40 in the mounted state of the assembly 10 (see Figure 10). Particularly, the first wall 26.2 of the base portion 26.1 is typically, the wall via which forces can be transferred from the plate member 40 to the mounting projection 26 in the mounted state of the assembly 10. As such, the first wall 26.2 of the base portion 26.1 is arranged and configured to contact a wall of the plate member 40 which delimits a respective receiving portion 41 of the plate member 40 which receives the mounting projection 26.

As is apparent from e.g. Figure 3, the first wall 26.2 of the base portion 26.1 can have an arc-shape, for instance. A respective arc-shape can be beneficial with respect to the transfer of forces between the mounting projection 26 and the respective plate member during mounting of the assembly 19 and in the mounted state of the assembly 10, respectively. The mounting projection 26 can thus, have a semi-circular disk basic shape, for instance. Generally, the shape of the first wall 26.2 of the base portion 26.1 can be chosen such that a maximum contact surface between the mounting projection 26 and the wall of the plate member 40 which delimits the respective receiving portion 41 of the plate member 40 is given such that an optimized transfer of forces is possible during mounting of the assembly 10 and in the mounted state of the assembly 10, respectively.

As is further apparent from e.g. Figure 3, the base portion 26.1 of the mounting projection 26 can comprise a second wall 26.3 facing the opening 23.1 in the second wall 23 of the base body 21. The second wall 26.3 of the base portion 26.1 can thus, be opposite to the first wall 26.2 of the base portion 26.1. The second wall 26.3 of the base portion 26.1 is thus, not arranged and configured to contact a wall of the plate member 40 which delimits the respective receiving portion 41 of the plate member 40 which receives the mounting projection 26.

The second wall 26.3 of the base portion 26.1 can have an inclined shape, particularly relative to the main extension plane of the second wall 23 of the base body 21 or a curved shape, particularly a concave or convex curved shape. Respective inclined or curved shapes of the second wall 26.3 of the base portion 26.1 can be beneficial for the structural properties of the mounting projection 26. Further, respective inclined or curved shapes of the second wall 26.3 of the base portion 26.1 can be beneficial for a weight-optimized design of the washer member 20. Hence, both the structural properties of the mounting projection 26 and the weight of the washer member 20 can be concertedly influenced via constructive-geometric parameters of the second wall 26.3 of the base portion 26.1. As an example, the structural properties of the mounting projection 26 and the weight of the washer member 20 can be concertedly influenced via the inclination angle β of an inclined second wall 26.3 of the base portion 26.1 or the radius of the curvature of a curved second wall of the base portion, respectively.

In the concrete exemplary embodiments of Figures 1 - 9, the second wall 26.3 of the base portion 26.1 of the respective mounting projection 26 has an inclined shape relative to the main extension plane of the second wall 23 of the base body 21, wherein the inclination angle β of the second wall 26.3 of the base portion 26.1 relative to the main extension plane of the second wall 23 of the base body 21 is different from the angle between the central axis C₂₅ of the receiving channel 25 relative to the main extension plane of the second wall 23 of the base body 21. Particularly, the inclination angle β of the second wall 26.3 of the base portion 26.1 relative to the main extension plane of the second wall 23 of the base body 21 can be higher than the angle between the central axis C₂₅ of the receiving channel 25 relative to the main extension plane of the second wall 23 of the base body 21. As an example, the inclination angle β of the second wall 26.3 of the base portion 26.1 relative to the main extension plane of the second wall 23 of the base body 21 can range between 50° and 60° and the angle between the central axis C₂₅ of the receiving channel 25 and the main extension plane of the second wall 23 of the base body 21 can range between 42.5° and 47.5°.

The base portion 26.1 of the mounting projection 26 further comprises a third wall 26.4 extending parallel to the main extension plane of the second wall 23 of the base body 21. The distance (in z-direction) between the second wall 23 of the base body 21 and the third wall 26.4 of the base portion 26.1 defines the height of the mounting projection 26 which can range between 1 mm and 10 mm, particularly between 1 mm and 7.5 mm, more particularly between 1 mm and 5 mm, more particularly between 1 mm and 3 mm, for instance. The height of the mounting projection 26 is also a geometric-constructive parameter of the washer member 20 via which the structural properties of the mounting projection 26 and the weight of the washer member 20 can be concertedly influenced.

In the exemplary embodiment of Figures 1-3, the washer member 20 comprises a single mounting projection 26. Hence, the washer member 20 can comprise only one distinct mounting projection 26. Providing the washer member 20 with only a single mounting projection 26 results in a simplified and weight-optimized design. As is apparent from Figures 1-3, the single mounting projection 26 can have a respective semi-circular disk basic shape as specified above.

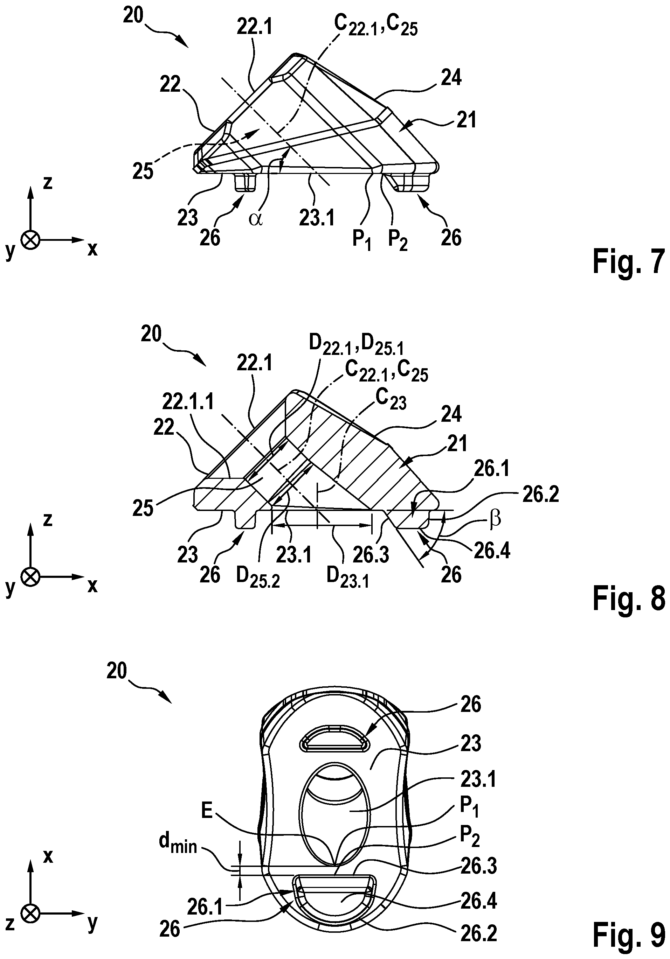

In the exemplary embodiments of Figures 4 - 9, the washer member 20 comprises a plurality of distinct mounting projections 26. As is apparent from Figures 4 - 9, at least two mounting projections 26 of the plurality of mounting projections 26 can have different dimensions and/or different base shapes. Hence, at least one wall of a respective base portion 26.1 of a first mounting projection 26 can differ from at least one wall of a respective base portion 26.1 of a second mounting projection 26 in at least one geometric-constructive parameter, for instance. As an example, at least one mounting projection 26 can have a semi-circular disk basic shape of first dimensions and at least one other mounting projection 26 can have a semi-circular disk basic shape of second dimensions different from the first dimensions (see e.g. Figures 4 - 6). As another example, at least one mounting projection 26 can have a cubic base shape or a cuboid base shape or cylindrical base shape and at least one other mounting projection 26 can have a base shape which is different from a cuboid base shape or cylindrical base shape, e.g. since it has a semi-circular disk basic shape as specified above (see e.g. Figures 7 - 9).

As is apparent from the exemplary embodiments of Figures 4 - 9, at least one first mounting projection 26 can be arranged at a first side of the opening 23.1 in the second wall 23 of the base body 21 and at least one second mounting projection 26 can be arranged at a second side of the opening 23.1 in the second wall 23 of the base body 21 which second side is opposite to the first side. A respective second wall 26.4 of the base portion 26.1 of a first mounting projection 26 provided at a first side of the opening 23.1 in the second wall 23 of the base body 21 can thus, also face a respective second wall 26.4 of the base portion 26.1 of a second mounting projection 26 provided at a second side of the opening 23.1 in the second wall 23 of the base body 21. Such an arrangement cannot only result in an improved weight balance of the washer member 20 but the provision of two or more mounting projections 26 can also enable that at least one mounting projection can serve for constraining motions of the washer member 29 in a respective receiving portion 41 of a respective plate member 40. In other words, at least one mounting projection 26 of the plurality of mounting projections 26 can be arranged and configured such that, in the mounted state of the assembly 10, forces can be transferred onto the washer member 20, and at least one other mounting projection 26 of the plurality of mounting projections 26 can be arranged and configured such that it constrains motions of the washer member 20 in the respective receiving portion 41 of the respective plate member 40 during mounting of the assembly 10.

In the exemplary embodiments of Figures 4 - 9, the respective right mounting projection 26 (see Figures 4, 5 and Figures 7, 8) is arranged and configured such that, in the mounted state of the assembly 10, forces can be transferred onto the washer member 20, and the respective left mounting projection(s) 26 are arranged and configured such that it/they constrains motions of the washer member 20 in the respective receiving portion 41 of the respective plate member 40 during mounting of the assembly 10.

In the exemplary embodiment of Figures 4 - 6, a first mounting projection 26 is arranged at a first side of the opening 23.1 in the second wall 23 of the base body 21 and two mounting projections 26 are arranged at a second side of the opening 23.1 in the second wall 23 of the base body 21, wherein the second side of the opening 23.1 in the second wall 23 of the base body 21 is opposite the first side of the opening 23.1 in the second wall 23 of the base body 21. Hence, the washer member 20 of this exemplary embodiment comprises three distinct mounting projections 26. The first mounting projection 26 arranged at the first side of the opening 23.1 in the second wall 23 of the base body 21 has a respective a semi-circular disk basic shape as specified above. The first mounting projection 26 is arranged and configured such that, in the mounted state of the assembly 10, forces can be transferred onto the washer member 20. The two mounting projections 26 arranged at the second side of the opening 23.1 in the second wall 23 of the base body 21 are arranged and configured such that they constrain motions of the washer member 20 in a respective receiving portion 41 of a respective plate member 40 during mounting of the assembly 10.

As is particularly, apparent from Figure 6, the two mounting projections 26 arranged at the second side of the opening 23.1 in the second wall 23 of the base body 21 have a different shape relative to the first mounting projection 26 arranged at the first side of the opening 23.1 in the second wall 23 of the base body 23. Particularly, the two mounting projections 26 arranged at the second side of the opening 23.1 in the second wall 23 of the base body 21 each have a cylindrical base shape in the exemplary embodiment of Figures 4 - 6. Particularly, the two mounting projections 26 arranged at the second side of the opening 23.1 in the second wall 23 of the base body 21 are identical in dimensions and/or shape in the exemplary embodiment of Figures 4 - 6. Also, the two mounting projections 26 arranged at the second side of the opening 23.1 in the second wall 23 of the base body 21 are arranged symmetrically with respect to the center of the opening in the second wall of the base body in the exemplary embodiment of Figures 4 - 6.

In the exemplary embodiment of Figures 7 - 9, a first mounting projection 26 is arranged at a first side of the opening 23.1 in the second wall 23 of the base body 21 and a second mounting projection 26 is arranged at a second side of the opening 23.1 in the second wall 23 of the base body 21, wherein the second side of the opening 23.1 in the second wall 23 of the base body 21 is opposite the first side of the opening 23.1 in the second wall 23 of the base body 21. Hence, the washer member 20 of this exemplary embodiment comprises two distinct mounting projections 26. The first mounting projection 26 arranged at the first side of the opening 23.1 in the second wall 23 of the base body 21 has a respective a semi-circular disk basic shape as specified above. The first mounting projection 26 is arranged and configured such that, in the mounted state of the assembly 10, forces can be transferred onto the washer member 20. The second mounting projection 26 arranged at the second side of the opening 23.1 in the second wall 23 of the base body 21 is arranged and configured such that it constrains motions of the washer member 20 in a respective receiving portion 41 of a respective plate member 40 during mounting of the assembly 10. The second mounting projection 26 arranged at the second side of the opening 23.1 in the second wall 23 of the base body 21 also has a respective a semi-circular disk basic shape as specified above. However, the dimensions of the second mounting projection 26 are smaller than the dimensions of the first mounting projection 26 in the exemplary embodiment of Figures 7-9.

In a further exemplary embodiment which is not shown in the drawings, a washer member 20 can comprise a first mounting projection 26 arranged at a first side of the opening 23.1 in the second wall 23 of the base body 21, wherein the first mounting projection 26 comprises a base portion 26.1 defined by a first wall 26.2 which faces away from the opening 23.1 in the second wall 23 of the base body 21, wherein the first wall 26.2 of the base portion 26.1 comprises an arc shape or a polygonal shape, and wherein the base portion 26.1 of the first mounting projection 26 comprises a second wall 26.3 facing the opening 23.1 in the second wall 23 of the base body 21, wherein the second wall 23 has an inclined shape, particularly relative to the main extension plane of the second wall 23 of the base body 21, or a curved shape. In this exemplary embodiment, the washer member 20 further comprises a second mounting projection 26 arranged at a second side of the opening 23.1 in the second wall 23 of the base body 21, wherein the second mounting projection 26 has a bar-like base shape, wherein the bar-like base shape comprises a first wall facing the opening 23.1 in the second wall 23 of the base body 21 and a second wall not facing the opening 23.1 in the second wall 23 of the base body 21, wherein the second wall of the base portion 26.1 of the mounting projection 26 has an inclined shape, particularly relative to the main extension plane of the second wall 23 of the base body 21, or a curved shape. When the second wall of the first mounting projection 26 and the second wall of the bar-like base body of the second mounting projection 26 each have an inclined shape, their respective inclination angles relative to the main extension plane of the second wall 23 of the base body 21 can be the same.

As indicated above, the receiving channel 25 of the base body 21 can have at least two sections having different inner diameters D_{25.1}, D_{25.2}. As such, the receiving channel 25 of the base body 25 can have a first section which has a first inner diameter D_{25.1} and at least one further section having a further inner diameter D_{25.2} different from the first inner diameter D_{25.1}. Particularly, the first inner diameter D_{25.1} can be smaller than the further inner diameter D_{25.2}. The first section can be an upper section such that the first section can be assigned to or comprise the opening 22.1 in the first wall 22 of the base body 21. As such, the inner diameter D_{22.1} of the opening 22.1 in the first wall 22 of the base body 21 can correspond to the inner diameter D_{25.1} of the first section. The first section can be a cylindrical section or a section comprising a cylindrical base shape, respectively. The further section can be a lower section such that the further section can be assigned to or comprise the opening 23.1 in the second wall 23 of the base body 21. The further section can thus, be assigned to or comprise the opening 23.1 in the second wall 23 of the base body 21. As such, the inner diameter D_{23.1} of the opening 23.1 in the second wall 23 of the base body 21 can correspond to the inner diameter D_{25.2} of the further section. When the inner diameter D_{23.1} of the opening 23.1 in the second wall 23 of the base body 21 is bigger than the inner diameter D_{22.1} of the opening 22.1 in the first wall 22 of the base body 21, the inner diameter D_{25.2} of the further section can axially widen up towards the opening 23.1 in the second wall 23 of the base body 21. The further section can thus, be a conical section or comprise a conical base shape, respectively.

Each of the base bodies 21 of the washer members 20 shown in the Figures can be provided with at least one gripping section 27, particularly built through a depression, recess, or the like, more particularly a depression, recess, or the like with an ergonomic shape, which enables that a user can safely grip the base body 21 e.g. when mounting the respective washer member 20. Preferably, at least one respective gripping portion 27 can be provided with the first wall 22 of the base body 21 and/or at least one respective gripping portion 27 can be provided with at least one side wall 28 of the base body 21 which laterally connects the first wall 22 of the base body 21 and/or the third wall 24 of the base body 21 with the second wall 23 of the base body 21.

Figure 10 shows that the assembly 10 can further comprise at least one fastening member 50 configured to be inserted in and penetrate through the receiving channel 25 of the base body 21. The at least one fastening member 50 can have a longitudinal base shape including a shaft portion 51 and can thus, be built as or comprise a screw, particularly a wood screw, or a threaded bolt, for instance.

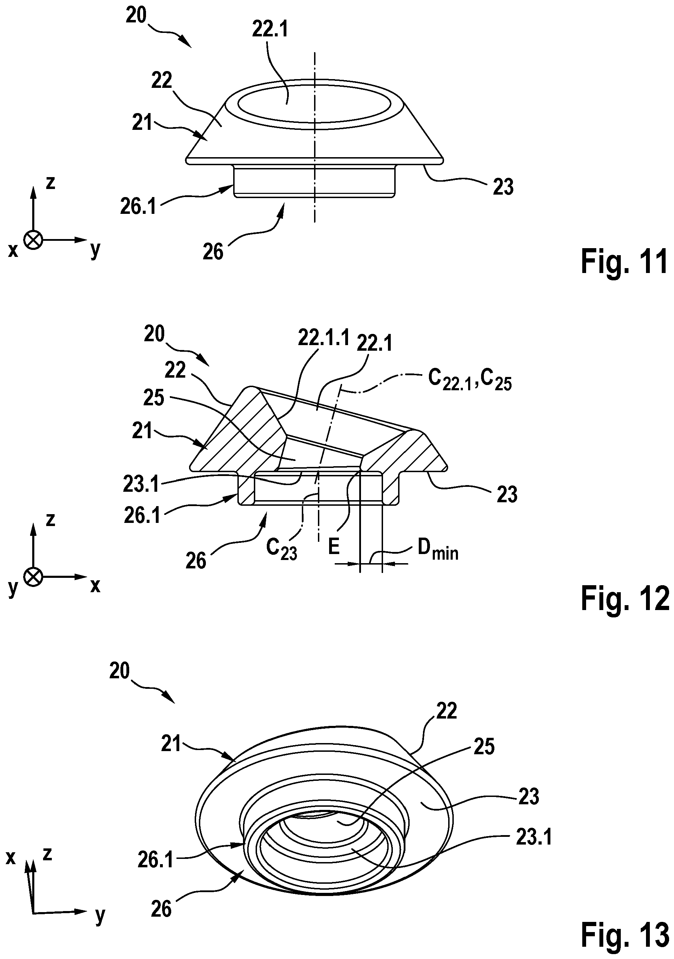

Figures 11 - 13 are principle drawings of a washer member 20 of an assembly 10 according to another exemplary embodiment. In the exemplary embodiment of Figures 11 - 13, the first wall 22 of the base body 21 of the washer member 20 has a conical base shape, particularly a frusto-conical base shape (frustum base shape). The base body 21 of the washer member 20 can have a top portion which comprises the opening 22.1. The top portion can be inclined relative to the second wall 23 of the base body 21 and its main extension plane, respectively such that also the receiving channel 25 and its central axis, respectively is inclined relative to the second wall 23 of the base body 21 and its main extension plane, respectively.

In such configurations, the mounting projection 26 can have a ring-shaped configuration which surrounds the opening 23.1 in the second wall 23 of the base body 21. The base portion 261. of the mounting projection 26 can thus, have a wall having a ring-shape. Even though not shown, a ring-segment shaped configuration of the mounting projection 26 is also contemplated herein. As is particularly apparent from Figure 12, the mounting projection 26 is disposed offset from an edge portion E of the second wall 23 of the base body 21 which delimits the opening 23.1 in the second wall 23 of the base body 21, wherein the minimum distance dₘᵢₙ between the edge portion E closest to the mounting projection 26 and the mounting projection 26 is at least 0.5 mm (just like in the other exemplary embodiments).

Figure 12 shows that also in such configurations, the opening 22.1 in the first wall 22 or the base body 21, respectively can comprise one or more support surfaces 22.1.1, e.g. slanted surfaces, for supporting a head portion of a fastening member 50, such as e.g. a screw head, in the mounted state of the assembly 10.

Each washer member 20 can be a metal component, particularly a cast metal component. Particularly, each washer member 20 can be made of an iron-based metal, such as steel, or of a lightweight metal, such as aluminum or an aluminum alloy, respectively. Further, each washer member 20 can be provided with an anti-corrosive surface which can be created via a chemically and/or physically applied coating, such as e.g. a plating.

Likewise, each plate member 40 can be a metal component. Particularly, each plate member 40 can be made of an iron-based metal, such as steel, or of a lightweight metal, such as aluminum or an aluminum alloy, respectively. However, a respective plate member 40 could also be a fiber board or made from a fiber board, for instance. Further, each plate member 40 can be provided with an anti-corrosive surface which can be created via a chemically and/or physically applied coating, such as e.g. a plating.

Likewise, each fastening member 50 can be a metal component. Particularly, each fastening member 50 can be made of an iron-based metal, such as steel. Further, each fastening member 50 can be provided with an anti-corrosive surface which can be created via a chemically and/or physically applied coating, such as e.g. a plating.

## Claims

1. An assembly for connecting construction elements, particularly timber construction elements, the assembly comprising:
- at least one washer member, the at least one washer member comprising a base body having a first wall comprising an opening and a second wall comprising an opening, wherein a receiving channel for receiving a fastening member extends through the base body between the opening in the first wall and the opening in the second wall,
wherein the base body comprises at least one mounting projection projecting off the second wall and configured to engage with a receiving portion of a plate member of the assembly, wherein the at least one mounting projection is disposed offset from an edge portion of the second wall delimiting the opening in the second wall, wherein the minimum distance between the edge portion closest to the at least one mounting projection and the mounting projection is at least 0.5 mm; and
- at least one plate member comprising at least one receiving portion for receiving the at least one mounting projection projecting off the second wall of the base body of the at least one washer member.

2. The assembly of claim 1, wherein the at least one mounting projection is offset from an edge portion of the second wall delimiting the opening in the second wall such that a fastening member which penetrates through the receiving channel cannot contact the at least one mounting projection.

3. The assembly of any one of claims 1 or 2, wherein the at least one mounting projection comprises a base portion defined by a first wall not facing the opening in the second wall of the base body; wherein the first wall of the base portion comprises an arc shape or a polygonal shape.

4. The assembly of any one of the preceding claims, wherein the base portion comprises a second wall facing the opening in the second wall of the base body, wherein the second wall of the base portion has an inclined shape, particularly relative to a main extension plane of the second wall of the base body, or a curved shape, particularly a concave or convex curved shape.

5. The assembly of claim 4, wherein the second wall of the base portion has an inclined shape relative to the main extension plane of the second wall of the base body, wherein the slanting angle of the second wall of the base portion relative to the main extension plane of the second wall of the base body is different from the angle between a central axis of the receiving channel relative to a main extension plane of the second wall of the base body.

6. The assembly of any one of the claims 3-5, wherein the base portion comprises a third wall extending parallel to a main extension plane of the second wall of the base body.

7. The assembly of any one of the preceding claims, wherein the at least one washer member comprises a single mounting projection.

8. The assembly of any one of the claims 1 - 6, wherein the at least one washer member comprises a plurality of mounting projections.

9. The assembly of claim 8, wherein at least two mounting projections of the plurality of mounting projections are arranged at opposite sides of the opening in the second wall of the base body; wherein optionally at least two mounting projections of the plurality of mounting projections have different dimensions and/or different base shapes.

10. The assembly of claim 8 or 9, wherein at least one first mounting projection is arranged at a first side of the opening in the second wall of the base body and at least two mounting projections are arranged at a second side of the opening in the second wall of the base body.

11. The assembly of any one of claims 9 - 10, wherein at least one mounting projection has a cubic base shape or a cuboid base shape or cylindrical base shape.

12. The assembly of any one of claims 9 - 11, wherein at least one mounting projection has a bar-like base shape, the bar-like base shape particularly defining a longitudinal axis, wherein the longitudinal axis is arranged at an angle, particularly at an angle of 90°, relative to a longitudinal axis of the base body;
wherein optionally the bar-like base shape comprises a first wall facing the opening in the second wall of the base body and a second wall not facing the opening in the second wall of the base body, wherein the second wall of the base portion has an inclined shape, particularly relative to the main extension plane of the second wall of the base body, or a curved shape.

13. The assembly of any one of claims 9 - 12, comprising a first mounting projection arranged at a first side of the opening in the second wall of the base body, wherein the first mounting projection comprises a base portion defined by a first wall which faces away from the opening in the second wall of the base body, wherein the first wall of the base portion comprises an arc shape or a polygonal shape; and wherein the base portion comprises a second wall facing the opening in the second wall of the base body, wherein the second wall of the base portion has an inclined shape, particularly relative to the main extension plane of the second wall of the base body, or a curved shape; and
a second mounting projection arranged at a second side of the opening in the second wall of the base body, wherein the second mounting projection has a cubic base shape or a cuboid base shape; and optionally further comprising a third mounting projection arranged at the second side of the opening in the second wall of the base body, wherein the third mounting projection has a cubic base shape or a cuboid base shape.

14. The assembly of any one of claims 9 - 13, comprising a first mounting projection arranged at a first side of the opening in the second wall of the base body, wherein the first mounting projection comprises a base portion defined by a first wall which faces away from the opening in the second wall of the base body, wherein the first wall of the base portion comprises an arc shape or a polygonal shape; and wherein the base portion comprises a second wall facing the opening in the second wall of the base body, wherein the second wall of the base portion has an inclined shape, particularly relative to the main extension plane of the second wall of the base body, or a curved shape; and
a second mounting projection arranged at a second side of the opening in the second wall of the base body, wherein the second mounting projection has a bar-like base shape, wherein the bar-like base shape comprises a first wall facing the opening in the second wall of the base body and a second wall not facing the opening in the second wall of the base body, wherein the second wall of the base portion has an inclined shape, particularly relative to the main extension plane of the second wall of the base body, or a curved shape.

15. The assembly of any one of the preceding claims, wherein the first wall has a main extension plane and the second wall has a main extension plane, wherein the main extension plane of the first wall is inclined relative to the second main extension plane of the second wall at angle between 5° and 85°, particularly between 15° and 75°, more particularly between 25° and 65°.

16. The assembly of any one of the preceding claims, wherein at least two sections of the receiving channel have different inner diameters.
